# EUROPEAN PATENT APPLICATION

(11) **EP 4 576 714 A1**
(43) Date of publication of application: **25.06.2025**
(21) Application number: 24221654.7
(22) Date of filing: 19.12.2024
(51) Int. Cl.: H04L 45/00, H04L 45/74, H04L 45/745, H04L 45/02

(54) **MULTI-REGION PACKET ROUTING USING PATH SYMMETRY**

(30) Priority: 19.12.2023 US 202318545319
(71) Applicant: Google LLC, Mountain View, CA 94043 (US)
(72) Inventor: MORENO, Victor Manuel, Mountain View, California 94043 (US); SACHDEV, Avneesh, Mountain View, California 94043 (US)
(74) Representative: Betten & Resch

(57) **Abstract**

Aspects of the disclosed technology include techniques and mechanisms for multi-region packet routing using path symmetry. A system may assign a source node and network service stack pair to an affinity group, where the network service stack is assigned to route data packets from the source node and to a destination node. The system may tag each pair that is associated with an affinity group. Based on receiving a data packet to be routed from a source node to a destination node, the system may perform a lookup operation to determine whether the source node is associated with an affinity group. Based on determining the source node is associated with an affinity group, the system may route the data packet to the network service stack that is assigned to the affinity group.

## Description

### BACKGROUND

A network may span one or more geographic regions. Each geographic region may include a subset of the network, with each network subset including any number of computing devices and stateful devices. Each network subset may support communication across the network such that the computing devices in one geographic region may communicate with computing devices in a different geographic region. Traffic that is transmitted between the computing devices in different geographic regions may interface with the same stateful device that may be located, for example, on the perimeter of a network subset. For example, traffic transmitted from a network subset in a first geographic region to a network subset in a second geographic region may traverse the same stateful device as traffic transmitted from the network subset in the second geographic region to the first geographic region.

Stateful devices may be configured to review traffic transmissions and data associated therewith. For example, a stateful device may, typically, need to see both directions of request and response traffic to implement a desired functionality. If the request traffic and the response traffic flow through different stateful devices, this may result in a break in communication. To avoid the break in communication, requests and returns may be directed toward a common stateful device to ensure that return traffic is routed through the same stateful device.

However, directing requests and returns to a common stateful device may result in all traffic within the network flowing through the common stateful device. Such traffic flows may result in bottlenecking, increased transmission delays, and/or overloading of the common stateful device.

### SUMMARY

Aspects of the disclosed technology include methods, apparatuses, systems, and computer-readable media for multi-region packet routing using path symmetry. For example, a listing of endpoints with affinity to a particular network service stack may be referred to herein as an affinity pair. The listing of endpoints within the affinity pair may include one or more source nodes that are assigned to a specific network service stack. In some instances, the listing of endpoints within the affinity pair may include one or more destination nodes that receive processed data packets via assigned network service stacks. In either instance, each affinity pair includes one of a source node or a destination node, and an assigned network service stack. Affinity pairs that share the same assigned network service stack may be grouped and are referred to herein as affinity groups.

According to one instance, a system may assign a source node and network service stack pair to an affinity group, where the network service stack is assigned to route data packets from the source node and to a destination node. The system may tag each pair that is associated with an affinity group. Based on receiving a data packet to be routed from a source node to a destination node, the system may perform a lookup operation to determine whether the source node is associated with an affinity group. Based on determining the source node is associated with an affinity group, the system may route the data packet to the network service stack that is assigned to the affinity group.

A network service stack may be configured to route data packets from a source node to a destination node. The source nodes may be associated with a domain that may be different from the domain associated with one or more destination nodes. For example, a first domain may be a user domain, and a second domain may be an enterprise cloud computing domain. An enforcement node within the system may receive a data packet to be routed from the first domain to the second domain. In some instances, the enforcement node may analyze the data packet to determine whether the data packet originates from a source node that is authorized to forward communication to a destination node in the second domain.

In some instances, the enforcement node may determine that the source node is not authorized to route data packets to the destination node, and may transmit a notification to the source node indicating that the data packet cannot be routed. However, in some instances, the enforcement node may determine that the source node is authorized to route data packets to the destination, and may prepare the data packet for routing. Authorization to communicate with destination nodes may depend on privileges associated with the source node. The privileges may indicate, for example, data and resources that the source node may request, data and resources that the source node may be restricted from accessing, or the like.

The enforcement node may receive a listing of the affinity groups from at least one domain. The enforcement node may parse the listing of affinity groups and may compare the listing of the affinity groups to a forwarding table stored within the data packet routing environment. In some instances, the forwarding table may be a master forwarding table, a request traffic forwarding table, or a return traffic forwarding table. The enforcement node may identify, within the forwarding table, the source nodes that are affiliated with the listed affinity groups. The enforcement node may assign a unique identifier, such as a tag, to each route within the forwarding table that is associated with the source node. The tag may function as an indication of membership within a particular affinity group.

The enforcement node may parse the received data packet to identify the source node from which the data packet originated. Based on identifying the source node associated with the data packet, the enforcement node may perform a lookup operation within the tagged forwarding table to determine whether the source node is affiliated with an affinity group. Based on determining that the source node is associated with an affinity group, the enforcement node may tag the data packet with the unique identifier associated with the affinity group.

The enforcement node may retrieve, from the tagged forwarding table, an identifier of the next network hop that the data packet may follow to arrive at the destination node. In some instances, the identifier may be an internet protocol (IP) address/IP prefix. For example, the next hop may be from the enforcement node to a network service stack and the enforcement node may steer the data packet toward the next hop address within the network service stack.

In some instances, the enforcement node may determine that the network service stack that is assigned to process the data packet is located in a different region from the enforcement node. The enforcement node may perform a forwarding lookup operation on the tagged forwarding table to identify the correct region and may route the data packet to an enforcement node in the correct region, referred to herein as a second enforcement node. The second enforcement node may perform the analysis described above that is performed by the enforcement node. The second enforcement node may route the data packet to the network service stack that is configured to process the data packet. The network service stack may process the received data packet and may route the processed data packet to the destination node.

In some instances, the network service stack may route the processed data packet back to the enforcement node (or the second enforcement node) using, for example, one or more tunnels associated with the enforcement node (or the second enforcement node). The enforcement node (or the second enforcement node) may perform a lookup operation within the tagged forwarding table to identify an IP address/IP prefix associated with the destination node. The enforcement node (or the second enforcement node) may route the processed data packet to the destination node.

One aspect of the disclosure provides for a method for routing data packets, the method comprising: receiving, by one or more processors, a data packet transmitted to a destination node by a source node, the data packet comprising a source node identifier; determining, by the one or more processors, the source node identifier matches an affinity group in a forwarding table; and routing, by the one or more processors, the data packet to a network service stack that is assigned to the matched affinity group.

In the foregoing embodiment, the data packet further comprises a destination node identifier.

In the foregoing embodiments, the method further comprises, prior to routing the data packet, determining the destination node identifier matches the affinity group in the forwarding table.

In the foregoing embodiments, the source node is in a first domain; the destination node is in a second domain; and the destination node identifier indicates a region in the second domain where the destination node is located.

In the foregoing embodiments, the source node identifier is an internet protocol (IP) prefix that corresponds to the source node, and the destination node identifier is an IP prefix that corresponds to the destination node.

In the foregoing embodiments, determining the source node identifier matches the affinity group comprises comparing the source node identifier to a collection of affinity groups, each affinity group including source node and network service stack pairs.

In the foregoing embodiments, the method further comprises receiving, by the one or more processors and from the network service stack, a processed data packet; and routing, by the one or more processors, the processed data packet to the destination node.

In the foregoing embodiments, the method further comprises determining, by the one or more processors, the destination node is located in a same region as the one or more processors, wherein routing the data packet includes routing the data packet to the network service stack, the network service stack being in the same region as the one or more processors.

In the foregoing embodiments, the method further comprises determining the destination node is located in a different region than the one or more processors, wherein routing the data packet includes routing the data packet to the network service stack, the network service stack being in the different region than the one or more processors.

Another aspect of the disclosure provides for a system for routing data packets, the system comprising: a source node within a first domain; a destination node within a second domain; and one or more processors configured to: receive a data packet transmitted to the destination node by the source node, the data packet comprising a source node identifier; determine the source node identifier matches an affinity group in a forwarding table; and route the data packet to a network service stack that is assigned to the matched affinity group.

In the foregoing embodiment, the data packet further comprises a destination node identifier.

In the foregoing embodiment, the one or more processors are further configured to, prior to routing the data packet, determine the destination node identifier matches the affinity group in the forwarding table.

In the foregoing embodiment, determining the source node identifier matches the affinity group causes the one or more processors to compare the source node identifier to a collection of affinity groups, each affinity group including source node and network service stack pairs.

In the foregoing embodiment, the one or more processors are further configured to: determine the destination node is located in a same region as the one or more processors, wherein routing the data packet includes routing the data packet to the network service stack, the network service stack being in the same region as the one or more processors.

In the foregoing embodiment, the one or more processors are further configured to: determine the destination node is located in a different region than the one or more processors, wherein routing the data packet includes routing the data packet to the network service stack, the network service stack being in the different region than the one or more processors.

Another aspect of the disclosure provides for a non-transitory computer readable storage medium storing instructions that, when executed by one or more processors for routing data packets, cause the one or more processors to: receive a data packet transmitted to a destination node by a source node, the data packet comprising a source node identifier; determine the source node identifier matches an affinity group in a forwarding table; and route the data packet to a network service stack that is assigned to the matched affinity group.

In the foregoing embodiment, the instructions, when executed, further cause the one or more processors to: receive, from the network service stack, a processed data packet; and route the processed data packet to the destination node.

In the foregoing embodiment, the source node is in a first domain and the destination node is in a second domain.

In the foregoing embodiment, the data packet further comprises a destination node identifier; and the destination node identifier indicates a region in the second domain where the destination node is located.

In the foregoing embodiment, determining the source node identifier matches the affinity group further causes the one or more processors to compare the source node identifier to a collection of affinity groups, each affinity group including source node and network service stack pairs.

### BRIEF DESCRIPTION OF THE DRAWINGS

FIG. 1 illustrates an example environment for multi-region packet routing using path symmetry, in accordance with aspects of the disclosure.
FIG. 2 illustrates an example listing of affinity groups for multi-region packet routing using path symmetry, in accordance with aspects of the disclosure.
FIG. 3 illustrates a flow diagram of an example process for multi-region packet routing via an enforcement node and using path symmetry, in accordance with aspects of the disclosure.
FIG. 4 illustrates example data packet components that are used for multi-region packet routing using path symmetry, in accordance with aspects of the disclosure.
FIG. 5A illustrates an example of a master forwarding table for multi-region packet routing using path symmetry, in accordance with aspects of the disclosure.
FIG. 5B illustrates an example of a request traffic forwarding table for multi-region packet routing using path symmetry, in accordance with aspects of the disclosure.
FIG. 5C illustrates an example of a return traffic forwarding table for multi-region packet routing using path symmetry, in accordance with aspects of the disclosure.
FIG. 6 illustrates a flow diagram of an example process for multi-region packet routing via a network service stack and using path symmetry, in accordance with aspects of the disclosure.
FIGS. 7A-7B illustrate a flow diagram of an example process for multi-region packet routing via a plurality of enforcement nodes and a plurality of network service stacks, and using path symmetry, in accordance with aspects of the disclosure.
FIG. 8 illustrates a flow diagram of an example process for multi-region packet routing via a network service stack and using path symmetry, in accordance with aspects of the disclosure.
FIG. 9 illustrates a flow diagram of an example process for multi-region packet routing via an enforcement node and using path symmetry, in accordance with aspects of the disclosure.
FIG. 10 illustrates a flow diagram for an example method for multi-region packet routing using path symmetry, in accordance with aspects of the disclosure.
FIG. 11 illustrates a block diagram of an example computing environment for multi-region packet routing using path symmetry, in accordance with aspects of the disclosure.

### DETAILED DESCRIPTION

The technology described herein provides for multi-region packet routing using path symmetry. Routing data packets across regions and/or domains may be performed in a cloud computing environment. When data packets are routed to a destination node within a cloud computing environment (or routed from a source node in the cloud computing environment to destination node in a user domain), more than one viable and active path may be needed across the cloud perimeter so that different data flows may be distributed across the different paths. Routing different flows across different paths may avoid overloading a single path and may reduce the bottlenecking and transmission delays that the single path may experience. Further, the cloud perimeter may be part of a distributed network-to-network interface (NNI) between at least two administrative domains, such as a first domain corresponding to a user domain and a second domain corresponding to an enterprise cloud computing domain.

The method and mechanism for routing packets using path symmetry described herein may differ from symmetric hashing techniques since the present disclosure may result in path symmetry across multiple networks with multiple hops. The described method and mechanism may function independently of inter-autonomous system (Inter-AS) routing and cross-domain policy variations, thereby allowing for implementations within distributed topologies.

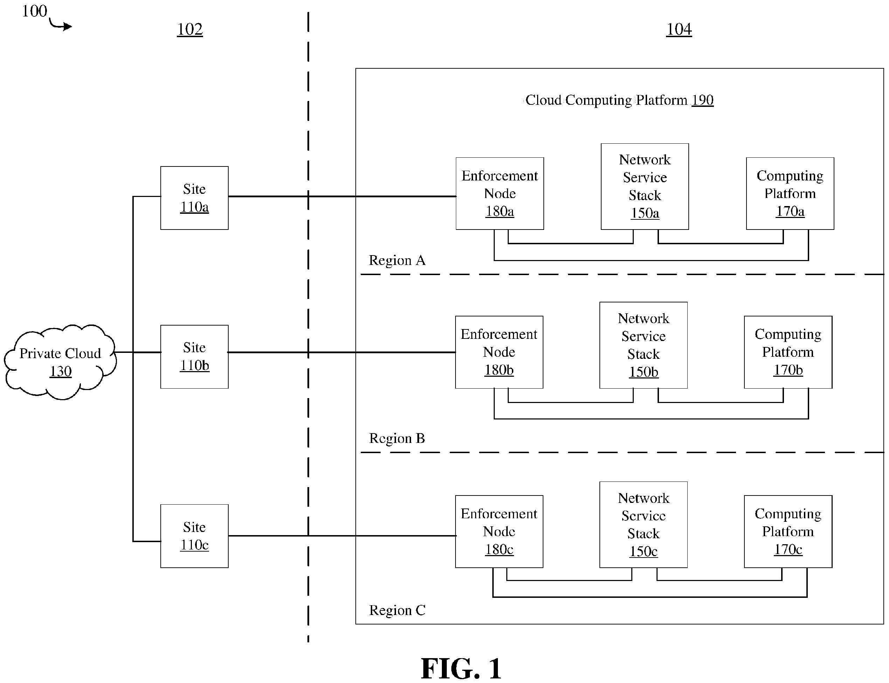

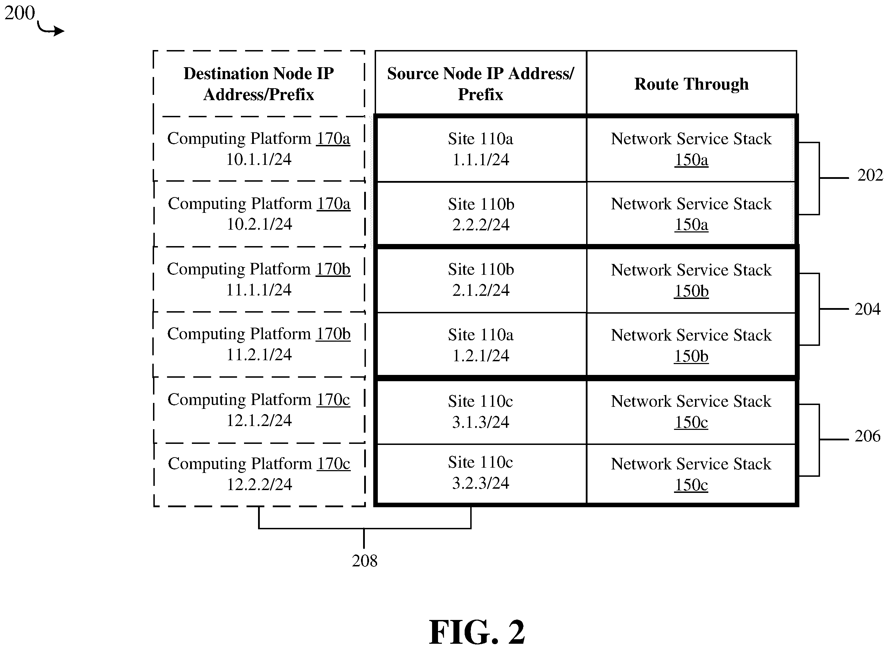

One or more nodes, stateful devices, network devices, and computing devices within the domains may be needed for multi-region packet routing using path symmetry. FIG. 1 illustrates an example environment for multi-region packet routing using path symmetry. As illustrated in FIG. 1, data packet routing environment 100 may include user domain 102 and enterprise cloud computing domain 104. User domain 102 may include private cloud 130 and sites 110a-110c. Enterprise cloud computing domain 104 may include cloud computing platform 190, which may include regions A-C. Each region may include a network service stack, a computing platform, and an enforcement node. For example, regions A-C may include network service stacks 150a-150c, computing platforms 170a-170c, and enforcement nodes 180a-180c. Each component of data packet routing environment 100 is discussed in detail below and in connection with FIGS. 2-9.

While FIG. 1 depicts two domains, multi-region packet routing using path symmetry may occur across two or more domains. Further, while FIG. 1 depicts three sites within user domain 102, a user domain may include more or less than three sites. While FIG. 1 depicts three regions within enterprise cloud computing domain 104, the enterprise cloud computing domain may include more or less than three regions. Three sites within user domain 102 and three regions within enterprise cloud computing domain 104 are depicted in data packet routing environment 100 for illustration purposes only, not limitation. Further, the user and enterprise cloud computing domains described herein are for illustration purposes only, not limitation.

User domain 102 may include one or more sites, such as sites 110a-110c. Each of sites 110a-110c may correspond to a geographic region that includes one or more user computing devices and/or one or more user servers. A user computing device within a site may receive communication from and route communication to another user computing device in a different site via a network. In some instances, a user computing device may route communication to an enterprise computing device within one of computing platforms 170a-170c of enterprise cloud computing domain 104.

Enterprise cloud computing domain 104 may include one or more regions, such as regions A-C. Each of regions A-C may correspond to a geographic region that includes one or more enterprise computing devices and/or one or more enterprise servers. The enterprise computing devices and servers are referred to herein generally as computing platforms 170a-170c. An enterprise computing device within one of computing platforms 170a-170c within one of regions A-C may receive communication from and route communication to another enterprise computing device in a different region via a virtualized server. The virtualized server may be hosted by a cloud computing environment, such as cloud computing platform 190. In some instances, an enterprise computing device may route communication to a user computing device within user domain 102.

As described below, data packets that are generated in each of sites 110a-110c may be routed to one of regions A-C based on affinity relationships between the sites and regions. In instances where no affinity relationship exists between a site and a region, a data packet may be processed in accordance with standard routing procedures. In some instances, the data packet might not be routed to a destination node.

An enforcement node affiliated with the region may correspond to one or more network devices configured to parse a data packet to identify at least one endpoint, such as a source node or a destination node. The enforcement node may also be configured to facilitate communication between the endpoints, such as between the source and destination nodes. For example, enforcement nodes 180a-180c may parse a data packet to identify a source node identifier and a destination node identifier. The source node identifier may be an internet protocol (IP) address/prefix that corresponds to the source node and the destination node identifier may be an IP address/prefix that corresponds to the destination node. Enforcement nodes 180a-180c may facilitate communication between the source node and the destination node.

Enforcement nodes 180a-180c may be elected by entities within user domain 102 and/or entities within enterprise cloud computing environment 104. Enforcement nodes 180a-180c may enforce one or more policies established by entities within user domain 102 and/or entities within enterprise cloud computing domain 104. More than one enforcement node, such as enforcement nodes 180a-180c, may be needed in multi-region environments because multiple inter-domain connectivity points may be needed to facilitate communication across domains. In some instances, one or more enforcement nodes may be needed per region or along the perimeter of each domain in the multi-region environments.

Enforcement nodes 180a-180c may receive a listing of affinity groups from at least one domain. For example, enforcement nodes 180a-180c may receive the listing of affinity groups from at least one of user domain 102 or enterprise cloud computing domain 104. The enforcement node may parse the listing of affinity groups and may compare the listing of the affinity groups to a forwarding table stored within cloud computing platform 190. For example, enforcement nodes 180a-180c may compare the listing of affinity groups to one of a master forwarding table, a request traffic forwarding table, or a return traffic return table.

Enforcement nodes 180a-180c may identify, within the forwarding table, the source nodes. In some instances, enforcement nodes 180a-180c may also identify, within the forwarding table, the destination nodes that are affiliated with affinity groups. Enforcement nodes 180a-180c may assign a unique identifier, such as a tag, to each route affiliated with the source node within the forwarding table that is associated with an affinity group. In some instances, an external control plane may assign the unique identifiers to the affinity group. In some instances, and as described further herein, data packets may be appended with the tag to indicate membership within a particular affinity group. The affinity group tags are added to the table that is used for performing forwarding lookup operations. In some instances, the affinity group tags may be added to the forwarding table. Further, in some instances, cloud computing platform 190 may store one or more different tables that are used to perform single table or multi-table forwarding lookup operations. In such instances, the affinity group tags may be stored in the single or multi-tables used to perform the forwarding lookup operations.

The forwarding table may indicate standard routes within data packet routing environment 100. For example, the forwarding table may indicate source nodes and destination nodes that may route communication between domains. However, the forwarding table might not assign the source and destination nodes to particular network service stacks that may be configured to process the data packets transmitted therebetween. The pairs of source nodes and network service stacks that are assigned to affinity groups in the listing of affinity groups 200 may indicate affinity group routes. For example, the affinity group routes may indicate, for each affinity group, the network service stack to be used to route a data packet originating from a source node affiliated with the affinity group. The affinity group routes may take precedence over the standard IP routes. Therefore, the forwarding table may include both the standard routes and the affinity group routes, such that all routes are available in a central location. In some instances, the affinity group routes may be listed in a separate table from the forwarding table.

When enforcement nodes 180a-180c receive a data packet, enforcement nodes 180a-180c may parse the data packet to identify a source node from which the data packet originated. Enforcement nodes 180a-180c may compare the source node to the affinity groups in the tagged forwarding table. Based on determining the source node is assigned to an affinity group, enforcement nodes 180a-180c may tag the data packet with the unique identifier that is affiliated with the affinity group.

Enforcement nodes 180a-180c may perform preliminary checks on the data packet. The preliminary checks may be used to identify traffic originating from a user computing device that should not be routed to the enterprise cloud computing domain 104. The preliminary checks may be performed only when data packets are routed from user domain 102 to enterprise cloud computing domain 104. The preliminary checks might not be conducted on data packets originating from an enterprise computing device.

In some instances, enforcement nodes 180a-180c may parse the data packet to identify the network service stack that is assigned to process the data packet. For example, enforcement nodes 180a-180c may parse the data packet to determine whether the data packet is tagged with an affinity group tag. Based on determining that the data packet is tagged, enforcement nodes 180a-180c may use the affinity group tag to determine whether the assigned network service stack is located within the region associated with the respective enforcement node. For instance, enforcement node 180a may determine the network service stack assigned to process the data packet is within region A, B, or C.

The enforcement node may re-route the data packet to the region where the network service stack is located if the network service stack is not located within the region associated with the enforcement node. For instance, if enforcement node 180a determines the network service stack that is assigned to process the data packet is within Region B or Region C, enforcement node 180a may route the data packet to enforcement node 180b or enforcement node 180c, respectively. In some instances, enforcement nodes 180a-180c may parse the data packet to identify the destination node to which the data packet is being routed. Enforcement nodes 180a-180c may determine whether the destination node is located in the region associated with the respective enforcement node. In some instances, enforcement node 180a-180c may re-route the data packet to the region that contains the destination node.

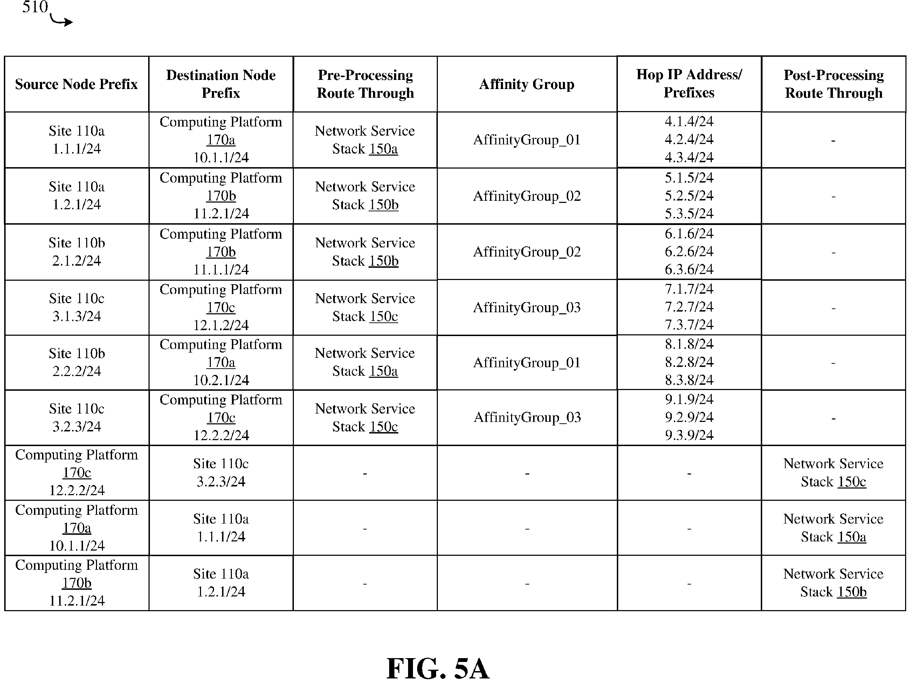

Enforcement nodes 180a-180c may use the master forwarding table, described in detail in connection with FIG. 5A, to re-route the data packet. Different instances of the master forwarding table may be available to each of regions A-C. Each instance of the master forwarding table may include routing information that is propagated to each region. However, the instance of the forwarding table that is available to each region may prioritize the routing information associated with that region. To re-route the data packet, enforcement nodes 180a-180c may perform a forwarding lookup operation on the master forwarding table to identify the affinity group with which the data packet is affiliated. In particular, enforcement nodes 180a-180c may identify the network service stack that is assigned to process the data packet. Enforcement nodes 180a-180c may route the data packet to the region in which the assigned network service stack is located.

In some instances, based on determining that the assigned network service stack is located within the region associated with that enforcement node, the enforcement node may determine whether a source node from which the data packet originated is authorized to route data packets to the destination node. Based on determining that the source node is authorized to route data packets to the destination node, enforcement nodes 180a-180c may use the tagged forwarding table to route the data packet to the network service stack for the region.

In instances where the enforcement nodes are processing return traffic, the enforcement nodes may use the tagged forwarding table to route the data packets to the destination nodes. For example, where enforcement nodes 180a-180c are processing data packets being routed from enterprise cloud computing domain 104 to user domain 102, enforcement nodes 180a-180c may identify the destination nodes within sites 110a-110c. Enforcement nodes 180a-180c may route the data packets directly to the destination nodes. Such data packets might not require stateful processing.

In some instances, the enforcement nodes may use a return traffic forwarding table to perform forwarding lookup operations when routing return traffic. In particular, the enforcement nodes may perform a forwarding lookup operation on the return traffic forwarding table to identify the destination node, which may correspond to the source node used to route request traffic.

In some instances, enforcement nodes 180a-180c may receive processed data packets from network service stacks 150a-150c. The enforcement nodes 180a-180c may route the processed data packets to the corresponding destination nodes. The corresponding destination nodes may be computing devices within computing platforms 170a-170c.

Network service stacks 150a-150c may parse data packet headers to determine whether the data packets should be routed to the destination node, denied routing to the destination node, dropped from data packet routing environment 100, logged within a routing log, or the like. In some instances, network service stacks 150a-150c may perform security checks on the data packet headers, tag header attributes, or the like. The actions taken upon the data packets may be defined in one or more data packet routing policies instituted within data packet routing environment 100.

In some instances, network service stacks 150a-150c may route the processed data packets to the corresponding destination nodes. The destination nodes may be computing devices within computing platforms 170a-170c. However, in some instances, network service stacks 150a-150c may route the processed data packets back to the enforcement node within the region, which may cause the enforcement node to route the processed data packet to the destination nodes.

Data packet routing environment 100 may include one or more network devices and one or more stateful devices that facilitate data packet routing across different domains. For example, sites 110a-110c within user domain 102 may communicate with each other via a private network. The private network may be hosted via a private cloud, such as private cloud 130. Data packets that originate from user domain 102 and that are ultimately being routed to enterprise cloud computing domain 104 may first be routed from one of sites 1 10a-1 10c within user domain 102 to one of regions A-C. Routing the data packets from user domain 102 to one of regions A-C may occur within a data interface. The data interface may include data packets that have not been processed by any of network service stacks 150a-150c.

In some instances, the data interface may be implemented as a physical or logical network interface that may be configured to connect an enforcement node to different data interfaces. In some instances, the data interface may be implemented by adding a bit or a tag to a network header when traffic is routed to any of enforcement nodes 180a-180c, where the bit or tag may indicate that one of enforcement nodes 180a-180c is processing the traffic. In such instances, the bit or tag may be removed from the network header before the traffic is routed to the final destination node.

Network service stacks 150a-150c may process data packets in a service interface. A service interface may carry traffic that has been processed by one of network service stacks 150a-150c. In some instances, the service interface may include the data packets that are prepared for routing to the corresponding destination nodes. The bits and/or tags that are added to the network headers of the data packets in the service interface may be removed before the data packets are routed to the respective destination nodes.

Routing data packets via the NNI may require one or more policies that regulate communication across domains 102 and 104 to achieve multi-path flows. Further, the one or more policies may describe mechanisms for enforcing bi-directionality or path symmetry at a group granularity. For example, the one or more policies may indicate actions to be executed on the data packets during processing by the assigned network service stack. Further, in some instances, the one or more policies may route data packets based on one or more traffic affinity groups, referred to herein as affinity groups.

FIG. 2 illustrates an example listing of affinity groups for multi-region packet routing. While three affinity groups are illustrated in FIG. 2, the listing of affinity groups may include more or fewer than three affinity groups. Three affinity groups are depicted for illustration purposes, not limitation.

As illustrated in FIG. 2, the listing of affinity groups 200 includes affinity groups 202-206. Each of affinity groups 202-206 may include one or more source node and network service stack pairs. Each source node and network service stack pair may route data packets across domains. For example, each source node and network service stack pair may route traffic from user domain 102 to enterprise cloud computing domain 104.

Each pair within affinity groups 202-206 may indicate a source node internet protocol (IP) prefix or IP address and a region through which data packets that originate from the source node are processed. Each of affinity groups 202-206 may also indicate, for each pair, a device through which data packets that originate from the source node are routed from the source node to the assigned region. For example, each of affinity groups 202-206 may indicate one of network service stacks 150a-150c that may be assigned to route data packets.

The information within affinity groups 202-206 may provide an indication of the routes that the data packets affiliated with an affinity group can traverse from a source node to a destination region.

Each source node within an affinity group may have an affinity relationship to the network service stack assigned to the affinity group. By assigning each affinity group to a respective network service stack, network traffic can be controlled to avoid overloading a single network service stack.

In some instances, entities within one of user domain 102 or enterprise cloud computing domain 104 may assign pairs to affinity groups 202-206. The pairs may be learned from external autonomous systems via border gateway protocol (BGP) with specific community attributes. An external domain, such as at least one of user domain 102 or enterprise cloud computing domain 104, may include network access control (NAC) systems that may catalog endpoints, such as destination nodes or network service stacks, into endpoint groups. The endpoint groups and the IP addresses or IP prefixes of the endpoints therein may be exchanged with other domains using one or more application programming interfaces (APIs) and/or one or more publish/subscribe buses. In some instances, entities within one of user domain 102 or enterprise cloud computing domain 104 may generate affinity groups 202-206 using the endpoint groups shared between domains 102 and 104.

Affinity groups 202-206 may be used to steer traffic from any forwarding device to specific network service stacks and then to specific sites or regions within data packet routing environment 100, where the one or more policies may be instantiated. The one or more policies that utilize affinity groups 202-206 may take precedence over IP routes that were previously used to steer traffic between domains 102, 104, or other domains that may exist within data packet routing environment 100. The one or more policies may generate affinity to one end of a connection such that traffic that corresponds to a particular source node IP prefix/IP address may be steered through a particular network service stack in the direction of the flow. Different IP prefixes may be defined to have affinity to different network service stacks.

The one or more policies and affinity groups 202-206 may be defined by entities within user domain 102 and/or entities within enterprise cloud computing domain 104. Different source node and network service stack pairs may be assigned to an affinity group based on user system preferences, enterprise system preferences, geography-based user policies, geography-based enterprise policies, user-specific policies, user-defined preferences, enterprise-specific policies, enterprise-defined preferences, or the like. In some instances, affinity groups 202-206 may be defined statically. Further, in some instances, affinity groups 202-206 may be defined dynamically such that one or more pairs may be re-defined at some time in the future based on route changes, network changes, domain changes, or the like.

FIG. 2 also depicts a listing of destination nodes. In some implementations, the listing of destination nodes may be combined with the listing of source nodes to create source and destination node pairs 208. Each source and destination node pair may be assigned to a particular network service stack that is configured to route data packets between the source node and the destination node. As such, each source and destination node pair may have affinity to a particular network service stack. In such instances, the one or more policies that utilize the affinity groups may generate affinity to more than one end of a connection such that traffic that corresponds to a particular source node IP prefix/IP address or a particular destination node IP prefix/IP address may be steered through a particular network service stack in the direction of the flow.

In some instances, source and destination node pairs 208 and the assigned network service stacks may be used to create the affinity groups. For example, in some implementations, affinity groups 202-206 may include source and destination node pairs 208 that are each assigned to the same network service stack. As such, each source and destination node pair within the affinity groups may indicate a source node internet protocol (IP) prefix or IP address and a destination node IP prefix or IP address. The information within the affinity groups may indicate the routes the data packet may traverse from the source node to the destination node.

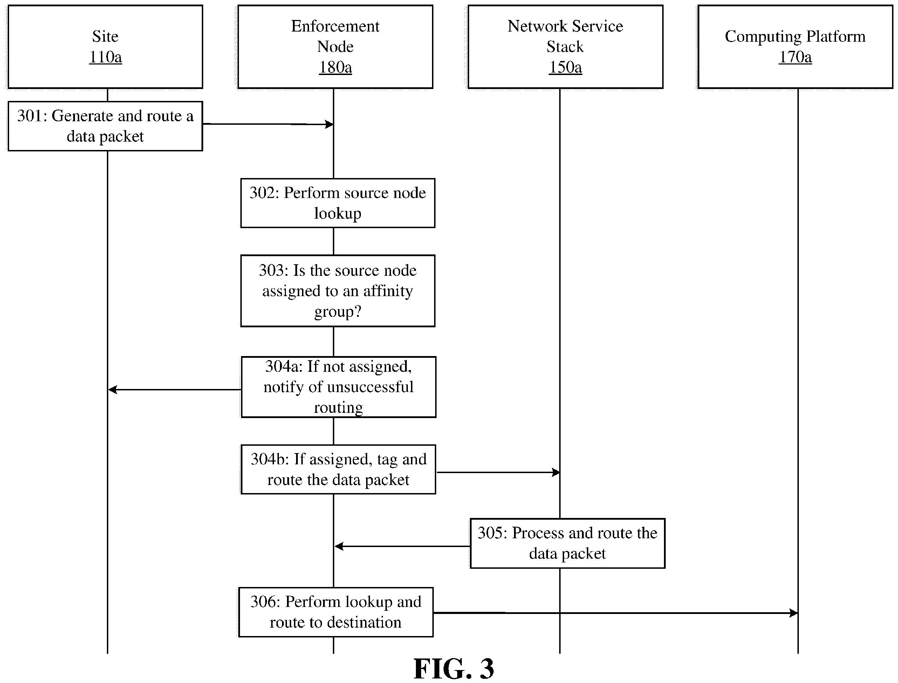

FIG. 3 illustrates a flow diagram of an example process for multi-region packet routing via an enforcement node and using path symmetry. In particular, FIG. 3 illustrates an example process for routing a data packet from user domain 102 to enterprise cloud computing domain 104 via an enforcement node. Components of site 110a and region A of data packet routing environment 100 are depicted in the example process solely for illustration purposes. The example process may be performed using any of sites 110a-110c and any of regions A-C.

At block 301, a data packet may be generated using a computing device in a site within user domain 102, such as a computing device within site 110a. The generated data packet may be transmitted from the computing device within site 110a to a region within enterprise cloud computing domain 104. More specifically, the generated data packet may be routed to an enforcement node within the region where the destination node is located. For example, if the destination node is located in region A, then the data packet may be routed to enforcement node 180a.

In some instances, each site within user domain 102 may have affinity to a region within enterprise cloud computing domain 104. As such, data packets that are generated in user domain 102 may be routed to the appropriate regions in enterprise cloud computing domain 104 based on the affinity relationships. In some instances, the affinity relationships between sites 110a-110c and regions A-C may be based on a network topology. For example, requests that originate from a particular site may be handled by a region that satisfies geographic proximity requirements. Further, in some instances, the affinity relationships may be based on a type of request within the data packet being routed. For example, requests that target particular enterprise resources or enterprise data may be handled by a region that hosts or maintains the resources and/or data. These examples are included by way of illustration only. The affinity relationships may be defined via additional or alternative methods.

In some instances, a site might not have an affinity relationship with a region. As such, data packets that originate from the site may be routed to any region and the components within the region may re-direct the data packet to the appropriate region based on the destination node to which the data packet is being routed.

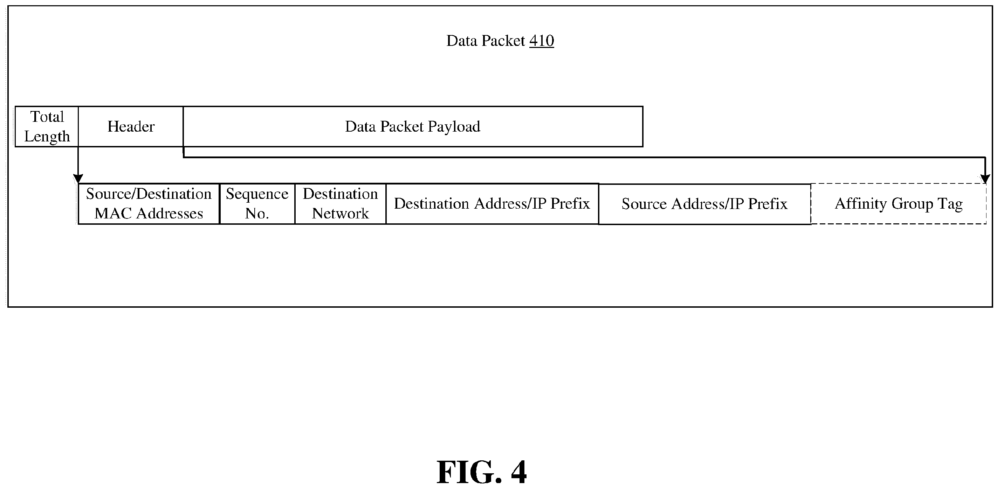

In some instances, when enforcement node 180a receives the data packet, enforcement node 180a may parse the data packet to identify different pieces of information therein and to analyze the identified information. FIG. 4 illustrates example data packet components that are used for multi-region packet routing using path symmetry. As illustrated in FIG. 4, components of example data packet 410 may include a total length of the data packet, a header, and a data packet payload. The total length of the data packet may represent a size of the data packet that may be indicated as a total number of bytes associated with the data packet. The size of the data packet may depend on the size of the header and the size of the payload. The header may include data such as an IP address or a media access control (MAC) address of the source node and an IP address or a MAC address of the destination node. The header may also indicate a sequence number, which may be a unique identifier associated with the data packet that may be used to track the transmission of the data packet and to determine whether the data packet was received and/or acknowledged by the destination node.

The header may also include an indication of a destination network, which may be an IP address of a network that may host the destination node. Further, the header may include the IP prefix or IP address of the source node and the IP prefix or IP address of the destination node. As introduced in the discussion of FIG. 1, the data packet may also include an affinity group tag that identifies an affinity group with which the data packet is affiliated. The affinity group tag within the data packet header may correspond to the unique identifier that is assigned to the affinity group. The data packet may include the payload, which may be the data and/or content being transmitted between domains.

In some instances, the data packet may include more or fewer components when compared to the example data packet depicted in FIG. 4. In some instances, the components within the data packet header may be listed within a different order than the components illustrated in FIG. 4.

In some implementations, enforcement node 180a may read both the source IP address and the destination IP address from the data packet to determine whether the source node is authorized to communicate with and/or exchange information with the destination node.

Based on determining the source node is not authorized to communicate with and/or exchange information with the destination node, enforcement node 180a may terminate processing of the data packet. In such instances, a message and/or notification may be routed to the source node to indicate failed routing of the data packet. For example, based on determining the source node is not authorized to communicate with the destination node, enforcement node 180a may route the notification to the source node computing device within site 1 10a. However, based on determining that the source node is authorized to communicate with and/or exchange information with the destination node, enforcement node 180a may proceed to block 302.

Returning to FIG. 3 and at block 302, enforcement node 180a may perform a forwarding lookup operation on the tagged forwarding table. Enforcement node 180a may parse the data packet to identify the source node IP address/IP prefix from which the data packet originated. In some instances, enforcement node 180a may parse the data packet to identify the destination node IP address/IP prefix. Enforcement node 180a may use the source node IP address/IP prefix (or the destination node IP address/IP prefix) to perform a source node lookup operation (or a destination node lookup operation) on the tagged forwarding table.

In instances where the affinity groups indicate affinity to one endpoint, enforcement node 180a may perform the lookup operation on the single endpoint. For example, enforcement node 180a may perform the lookup operation on the source node. In instances where the affinity groups indicate affinity to one or more endpoints, enforcement node 180a may perform the lookup operation on the one or more endpoints. For example, enforcement node 180a may perform the lookup operation on the source and destination node pair. Further still, in some instances, enforcement node 180a may perform the lookup operation on the destination node when the data packet is routed from user domain 102 to enterprise cloud computing domain 104. Further, in some instances, enforcement node 180a may perform the lookup operation on the source node when the data packet is routed from enterprise cloud computing domain 104 to user domain 102.

FIGS. 5A-5C illustrate examples of routing tables that may be used for multi-region packet routing using path symmetry. FIG. 5A illustrates a master table, also referred to herein as a master forwarding table. Master forwarding table 510 includes information that may be used during the pre-processing and post-processing of data packets between user domain 102 and enterprise cloud computing domain 104.

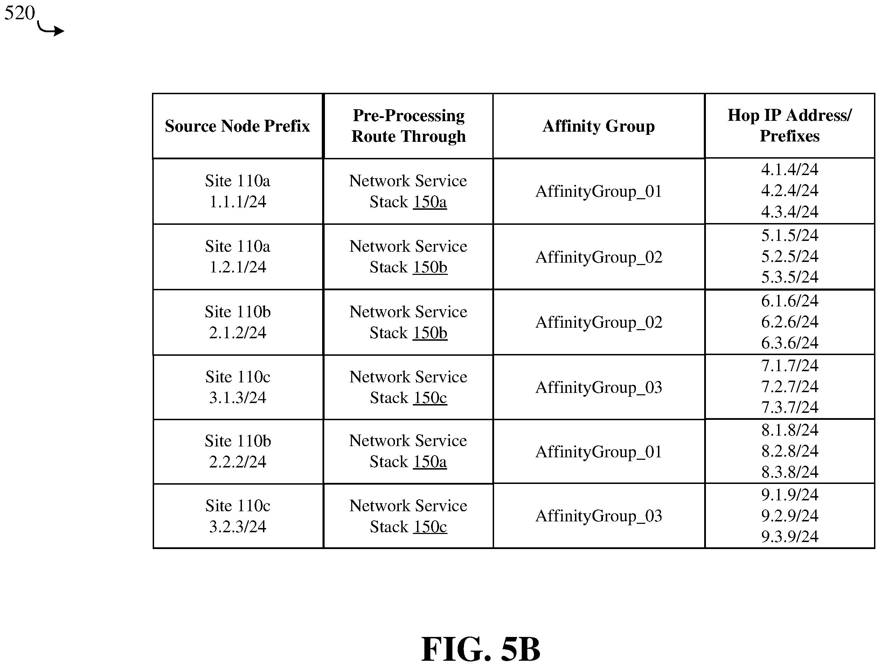

Pre-processing information may be used to route the data packet from the source node to the assigned network service stack for processing, also referred to herein as request traffic. In particular, request traffic may be routed from a site in user domain 102 to a region in enterprise cloud computing domain 104. For example, the pre-processing information on master forwarding table 510 may include the source node and network service stack pairs. The pre-processing information may also include the affinity group tag that is assigned to each source node and network service stack pair that is affiliated with an affinity group. Enforcement nodes 180a-180c may use the pre-processing information to route a data packet directly to the network service stack assigned to process the data packet. However, in some instances, enforcement nodes 180a-180c may route the data packet to one or more network locations, referred to herein as hops, before routing the data packet to the assigned network service stack. In such instances, the network address of each hop may be included in the pre-processing information. In some instances, the pre-processing information may be separated out of master forwarding table 510 into a distinct table. FIG. 5B illustrates an example of a request traffic forwarding table for multi-region packet routing using path symmetry. Request traffic forwarding table 520 may include the pre-processing information on master forwarding table 510.

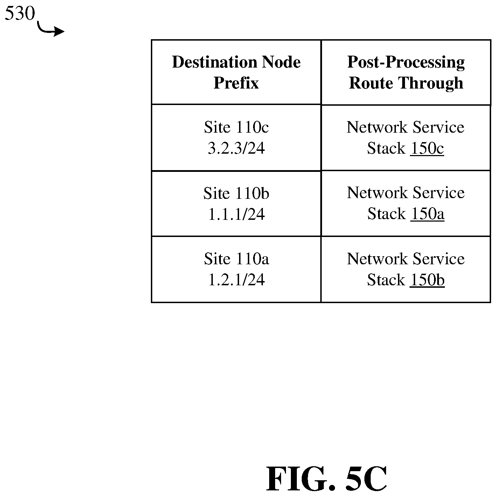

Post-processing information may be used to route a data packet from a region to a destination node, also referred to herein as return traffic. In particular, return traffic may be routed from a computing platform in enterprise cloud computing domain 104 to a site in user domain 102. For example, the post-processing information on master forwarding table 510 may include a network address of the destination node and a route through which the data packet is to be routed to the destination node. In some instances, the data packet may be routed to the destination node via one of an enforcement node or a network service stack. In some instances, the post-processing information may be separated out of master forwarding table 510 into a distinct table. FIG. 5C illustrates an example of a return traffic forwarding table for multi-region packet routing using path symmetry. Return traffic forwarding table 530 may include the post-processing information on master forwarding table 510.

Cloud computing platform 190 may store master forwarding table 510. Master forwarding table 510 may be available to regions A-C, but the display of information on master forwarding table 510 may be customized for each region. For example, when enforcement node 180a accesses master forwarding table 510 from region A, master forwarding table 510 may show the totality of affinity groups across all regions, but may prioritize the affinity groups affiliated with region A. As such, each of regions A-C may use master forwarding table 510 to perform forwarding lookup operations and route data packets to different regions.

In instances where the listing of affinity groups 200 is generated dynamically, enforcement node 180a may continuously receive updates and/or changes to the listing of affinity groups 200. As such, enforcement node 180a may use the updated listing of affinity groups to update master forwarding table 510, which may also be referred to herein as the tagged forwarding table.

In some instances, enforcement node 180a may determine a number of hops that may be needed to route the data packet from the source node to the network service stack or destination node. The number of hops may correspond to a number of network devices that the data packet may flow through to arrive at the network service stack or destination node. In some instances, master forwarding table 510 may also indicate an IP address or IP prefix for each hop.

In some instances, the tagged forwarding table may be generated by one or more different network devices within data packet routing environment 100. For example, one or more network devices within at least one of user domain 102 and/or enterprise cloud computing domain 104 may statically or dynamically generate master forwarding table 510. To do so, the one or more network devices may identify, from the listing of affinity groups 200, a source node IP address/IP prefix that is assigned to one of network service stacks 150a-150c. The one or more network devices may tag the source node IP address/IP prefix with the unique tag of the affinity group that corresponds to the assigned network service stack. In some instances, the one or more network devices may identify, from the listing of affinity groups 200, a destination node IP address/IP prefix that is assigned to one of network service stacks 150a-150c. The one or more network devices may tag the destination node IP address/IP prefix with the unique tag of the affinity group that corresponds to the assigned network service stack. Further, in some instances, the one or more network devices may identify, from the listing of affinity groups 200, a pair including a source node IP address/IP prefix and a destination node IP address/IP prefix that is assigned to one of network service stacks 150a-150c. The one or more network devices may tag the pair with the unique tag of the affinity group that corresponds to the assigned network service stack.
The one or more network devices may update master forwarding table 510 based on receiving updates to the listing of affinity groups. Further, the one or more network devices may determine the number of hops that may be needed to route the data packet from the source node to the destination node. The one or more network devices may store an IP address/prefix of each hop within master forwarding table 510 or the updated tagged forwarding table.

The one or more network devices may store master forwarding table 510 within cloud computing platform 190. As such, master forwarding table 510 may be retrieved by other devices within data packet routing environment 100, such as enforcement nodes 180a-180c.

At block 303, enforcement node 180a may determine whether the source node (or the destination node) is a member of an affinity group indicated on master forwarding table 510. Enforcement node 180a may determine whether the data packet is assigned to a specific network service stack in either direction of the data flow. In some instances, enforcement node 180a may retrieve an instance of master forwarding table 510 stored within the region, such as region A. In some instances, the forwarding table may be stored within a memory device, such as random access memory (RAM), associated with one of regions A-C of data packet routing environment 100.

At block 304a, enforcement node 180a may determine that the source node (or the destination node) is not a member of an affinity group indicated on master forwarding table 510. As such, enforcement node 180a may transmit a notification to the computing device within site 110a indicating unsuccessful routing of the data packet. In some instances, the notification may indicate at least one reason why the data packet cannot be routed to the destination node.

Alternatively, at block 304b, enforcement node 180a may determine that the source node (or the destination node) is a member of an affinity group indicated on master forwarding table 510. Enforcement node 180a may tag the source node and assigned network service stack pair with the unique tag that is affiliated with the affinity group. As illustrated in FIG. 4, the affinity group tag may be added to the data packet header.

Enforcement node 180a may retrieve, from master forwarding table 510, an identifier of the next hop that should be used to steer the data packet toward the assigned network service stack. For example, enforcement node 180a may retrieve an IP address or IP prefix of the next hop. Enforcement node 180a may route the data packet toward network service stack 150a via the service interface in the topological rendering of the interfaces. In some instances, enforcement node 180a may add additional metadata, such as a service bit, to the network header of the data packet being routed to the network service stack 150a. The service bit may indicate that the data packet is being processed by network service stack 150a and that that the data packet is not prepared for routing to the destination node.

At block 305, network service stack 150a may process the received data packet. Network service stack 150a may parse data packet headers to determine whether the data packets should be routed to the destination node, denied routing to the destination node, dropped from data packet routing environment 100, logged within a routing log, or the like. Network service stack 150a may act in accordance with the one or more data routing policies instituted within data packet routing environment 100. Network service stack 150a may route the processed data packet back to enforcement node 180a to be routed to the destination node.

At block 306, enforcement node 180a may receive the processed data packet via the service interface. In some instances, enforcement node 180a may receive the processed data packet via one or more tunnels associated with the enforcement nodes. Receiving the processed data packet may trigger enforcement node 180a to perform a second forwarding lookup operation on master forwarding table 510. Enforcement node 180a may retrieve, from master forwarding table 510, the IP address/IP prefix that corresponds to the destination node within computing platform 170a of enterprise cloud computing domain 104. Enforcement node 180a may remove the service bit from the network header of the processed data packet and may route the processed data packet to the destination node within computing platform 170a.

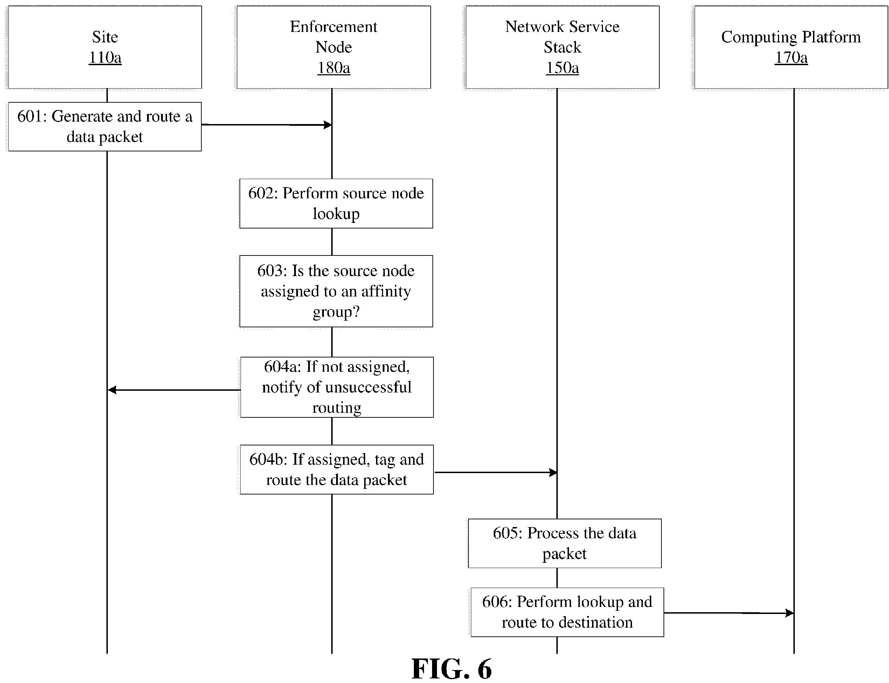

FIG. 6 illustrates a flow diagram of an example process for multi-region packet routing via a network service stack and using path symmetry. In particular, FIG. 6 illustrates an example process for routing a data packet from user domain 102 to enterprise cloud computing domain 104 via a network service stack. Components of site 110a and region A of data packet routing environment 100 are depicted in the example process solely for illustration purposes. The example process may be performed by any of sites 110a-110c and any of regions A-C.

Blocks 601-604b correspond to blocks 301-304b of FIG. 3. The differences between FIGS. 3 and 6 are discussed here.

At block 605, network service stack 150a may receive the data packet from enforcement node 180a and may process the received data packet. Network service stack 150a may parse data packet headers to determine whether the data packets should be routed to the destination node, denied routing to the destination node, dropped from data packet routing environment 100, logged within a routing log, or the like. Network service stack 150a may act in accordance with the one or more data routing policies instituted within data packet routing environment 100.

At block 606, and after the data packet has been processed, network service stack 150a may access master forwarding table 510. Network service stack 150a may perform a forwarding lookup operation on master forwarding table 510. Network service stack 150a may retrieve, from master forwarding table 510, the IP address/IP prefix that corresponds to the destination node within computing platform 170a. Network service stack 150a may remove the service bit from the network header of the data packet. Network service stack 150a may route the processed data packet to the destination node within computing platform 170a.

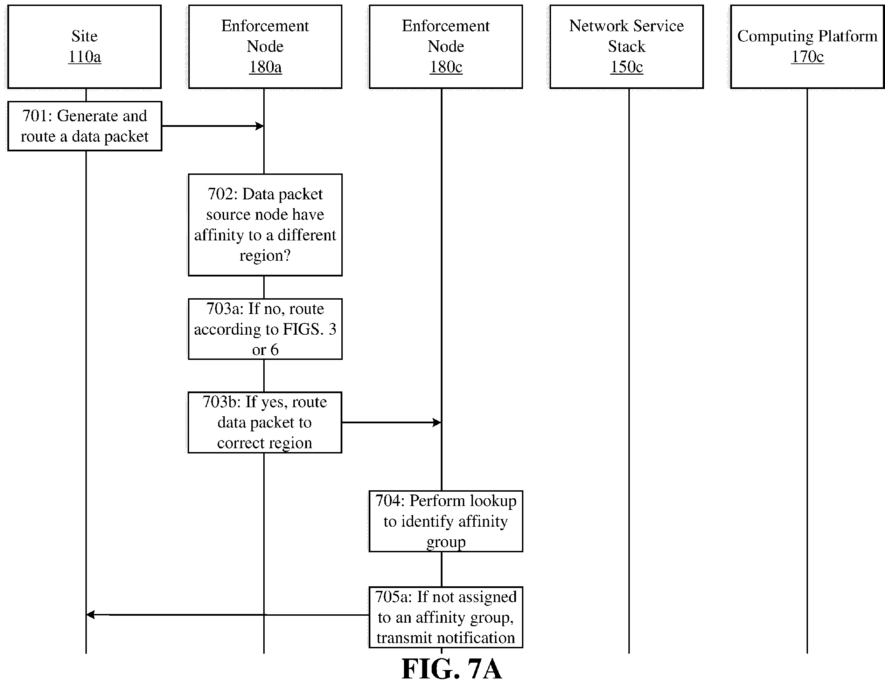

FIGS. 7A-7B illustrate a flow diagram of an example process for multi-region packet routing via a plurality of enforcement nodes and a plurality of network service stacks, and using path symmetry. In particular, FIGS. 7A-7B illustrate an example process for routing a data packet from user domain 102 to enterprise cloud computing domain 104 after routing the data packet across regions. Components of site 110a, region A, and region C of data packet routing environment 100 are depicted in the example process solely for illustration purposes. The example process may be performed by any of sites 110a-110c and any of regions A-C.

Referring to FIG. 7A and at block 701, a data packet may be generated using a computing device in site 110a. The generated data packet may be transmitted from the computing device within site 110a to a region within enterprise cloud computing domain 104. More specifically, the generated data packet may be routed to an enforcement node, such as enforcement node 180a, of the region, such as region A.

At block 702, enforcement node 180a may analyze the affinity relationship between site 110a and region A to determine whether site 110a has affinity to a different region. For example, enforcement node 180a may determine whether site 110a has affinity to one of region B or region C. To do so, enforcement node 180a may perform a lookup operation on master forwarding table 510 to identify the network service stack that is assigned to process the data packet. Enforcement node 180a may also determine, based on the lookup operation, the region within which the assigned network service stack is located.

If enforcement node 180a determines that site 110a has an affinity relationship with region A, then, at block 703a, enforcement node 180a may continue processing the data packet in accordance with the flow of either one of FIGS. 3 or 6.

However, if enforcement node 180a determines that site 110a has an affinity relationship with a different region within data packet routing environment 100, then, at block 703b, enforcement node 180a may route the data packet to the enforcement node affiliated with the correct region. For example, if enforcement node 180a determines that site 110a has affinity with region C, then enforcement node 180a may route the data packet to enforcement node 180c. Enforcement node 180c may receive the data packet from enforcement node 180a and may perform the preliminary checks on the data packet.

At block 704, enforcement node 180c may perform a lookup operation on master forwarding table 510 to determine if the source node (or the destination node) is a member of an affinity group. For example, enforcement node 180c may perform the lookup operation on the source node (or the destination node) to determine whether the source node (or destination node) has an affinity group tag. The processing at block 704 may be similar to that of blocks 302 and 602 of FIGS. 3 and 6, respectively.

If enforcement node 180c determines that the source node is not a member of an affinity group, then, at block 705a, enforcement node 180c may notify site 110a. In particular, based on determining that the source node is not assigned to an affinity group in master forwarding table 510, then, enforcement node 180c may transmit a notification to the computing device within site 1 10a. The notification may indicate unsuccessful routing of the data packet. The processing at block 705a may be similar to that of blocks 304a and 604a of FIGS. 3 and 6, respectively.

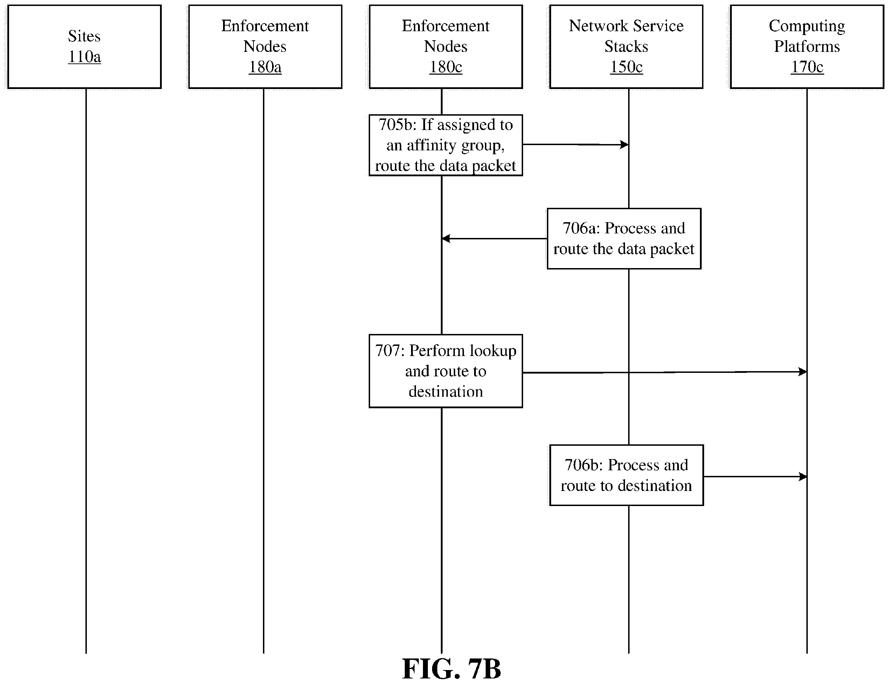

However, if enforcement node 180c determines that the source node is a member of an affinity group, then, referring to block 705b of FIG. 7B, enforcement node 180c may perform a lookup operation on master forwarding table 510. Enforcement node 180c may retrieve, from master forwarding table 510, an IP address or IP prefix of the next hop that should be used to steer the data packet toward the assigned network service stack. The retrieved IP address or IP prefix may indicate the network service stack assigned to process data packets associated with the affinity group. For example, enforcement node 180c may retrieve the IP address or IP prefix of network service stack 150c. Enforcement node 180c may route the data packet to network service stack 150c. The processing in block 705b may be similar to that of blocks 304b and 604b of FIGS. 3 and 6, respectively.

At block 706a, network service stack 150c may process the data packet. Network service stack 150c may route the processed data packet back to enforcement node 180c. The processing in block 706a may be similar to that of blocks 305 of FIG. 3.

At block 707, enforcement node 180c may receive the processed data packet via the service interface. This may trigger enforcement node 180c to perform a second forwarding lookup operation on master forwarding table 510. Enforcement node 180c may retrieve, from master forwarding table 510, the IP address/IP prefix that corresponds to the destination node within computing platform 170c of enterprise cloud computing domain 104. Enforcement node 180c may route the processed data packet to the destination node within computing platform 170c of enterprise cloud computing domain 104. The processing in block 707 may be similar to that of block 306 of FIG. 3.

Alternatively, at block 706b, network service stack 150c may receive the data packet from enforcement node 180c and may process the received data packet. Network service stack 150c may parse data packet headers to determine whether the data packets should be routed to the destination node, denied routing to the destination node, dropped from data packet routing environment 100, logged within a routing log, or the like. Network service stack 150c may act in accordance with the one or more data routing policies instituted within data packet routing environment 100. Network service stack 150c may access master forwarding table 510 to perform a forwarding lookup operation. Network service stack 150c may retrieve, from master forwarding table 510, the IP address/IP prefix that corresponds to the destination node within computing platform 170c. Network service stack 150c may route the processed data packet to the destination node within computing platform 170c. The processing in block 706b may be similar to that of blocks 605-606 of FIG. 6.

The example processes of routing request traffic in FIGS. 3 and 6-7B may also be executed by performing forwarding lookup operations on request traffic routing table 520 illustrated in FIG. 5B.

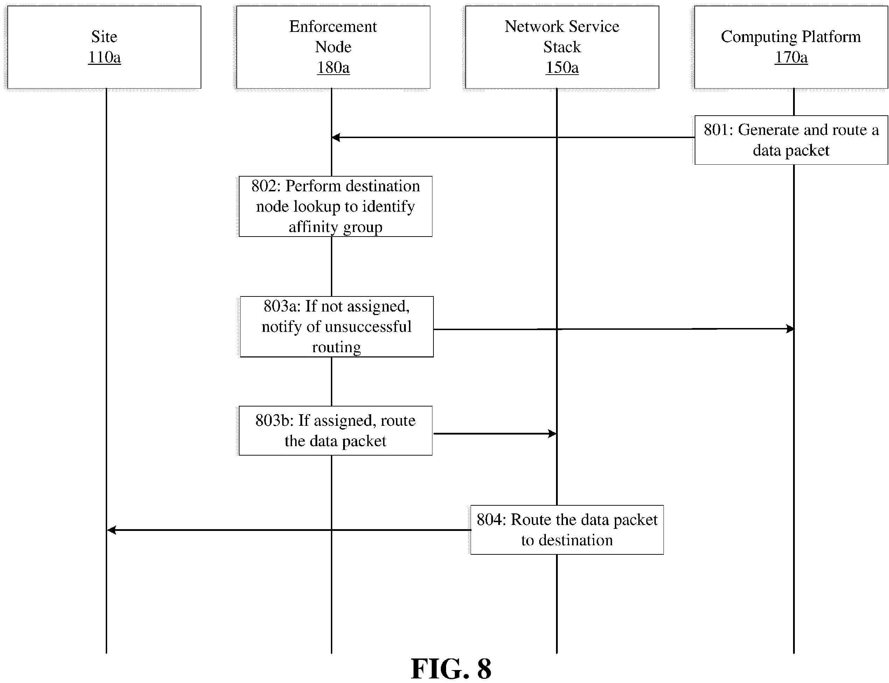

FIG. 8 illustrates a flow diagram of an example process for multi-region packet routing via a network service stack and using path symmetry. In particular, FIG. 8 illustrates an example process for routing a data packet from enterprise cloud computing domain 104 to user domain 102 via a network service stack. Components of region A and site 110a of data packet routing environment 100 are depicted in the example process solely for illustration purposes. The example process may be performed by any of sites 110a-110c and any of regions A-C.

At block 801, a data packet may be generated using a computing device in a region within enterprise cloud computing domain 104. For example, the data packet may be generated using a computing device within computing platform 170a. The generated data packet may be transmitted to the enforcement node affiliated with the region. For example, the generated data packet may be routed to enforcement node 180a affiliated with region A.

At block 802, enforcement node 180a may perform a lookup operation on master forwarding table 510 to determine if the destination node is a member of an affinity group indicated on master forwarding table 510. In doing so, enforcement node 180a may determine whether the data packet is assigned to a specific network service stack.

If enforcement node 180a determines that the destination node is not a member of an affinity group indicated on master forwarding table 510, then, at block 803a, enforcement node 180a may transmit a notification to computing platform 170a. In particular, enforcement node 180a may transmit the notification to a computing device within computing platform 170a. The notification may indicate unsuccessful routing of the data packet.

However, if enforcement node 180a determines that the destination node is a member of an affinity group indicated on master forwarding table 510, then, at block 803b, enforcement node 180a may retrieve an identifier that indicates the next hop. For example, enforcement node 180a may retrieve, from master forwarding table 510, an IP address or IP prefix of the next hop that should be used to steer the data packet toward the network service stack that is assigned to process data packets that are affiliated with the affinity group. For example, enforcement node 180a may steer the data packet toward network service stack 150a. Enforcement node 180a may route the data packet toward network service stack 150a via the service interface in the topological rendering of the interfaces.

At block 804, network service stack 150a may receive the data packet. In some instances, network service stack 150a may process the received data packet as described in connection with FIGS. 3 and 6. In some instances, the data packet might not undergo processing when the processing is performed as an additional security measure to determine whether the data packets originating from user domain 102 should be routed to the enterprise cloud computing domain 104. Such security measures might not be instituted when routing traffic from enterprise cloud computing domain 104 to user domain 102.

Therefore, network service stack 150a may access master forwarding table 510 to perform a lookup operation. Network service stack 150a may retrieve, from master forwarding table 510, the IP address/IP prefix that corresponds to the destination node within site 110a. Network service stack 150a may route the data packet to the destination node within site 110a.

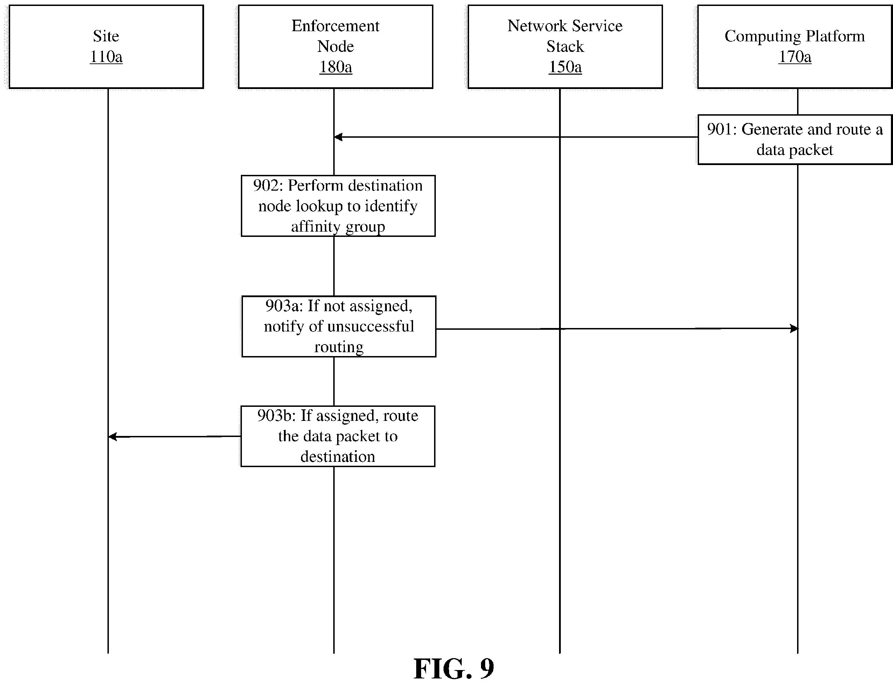

FIG. 9 illustrates a flow diagram of an example process for multi-region packet routing via an enforcement node and using path symmetry. In particular, FIG. 9 illustrates an example process for routing a data packet from enterprise cloud computing domain 104 to user domain 102 via an enforcement node. Components of region A and site 110a of data packet routing environment 100 are depicted in the example process solely for illustration purposes. The example process may be performed by any of sites 110a-110c and any of regions A-C.

Blocks 901-903a correspond to blocks 801-803a of FIG. 8. The differences between FIGS. 8 and 9 are discussed here.

At block 903b, and based on determining that the destination node is assigned to an affinity group, enforcement node 180a may perform a second forwarding lookup operation on master forwarding table 510. Enforcement node 180a may retrieve, from master forwarding table 510, the IP address/IP prefix that corresponds to the destination node within site 110a of user domain 102. Enforcement node 180a may route the data packet to the destination node within site 110a of user domain 102.

The example processes of routing return traffic in FIGS. 8-9 may also be executed by performing forwarding lookup operations on return traffic routing table 530 illustrated in FIG. 5C.

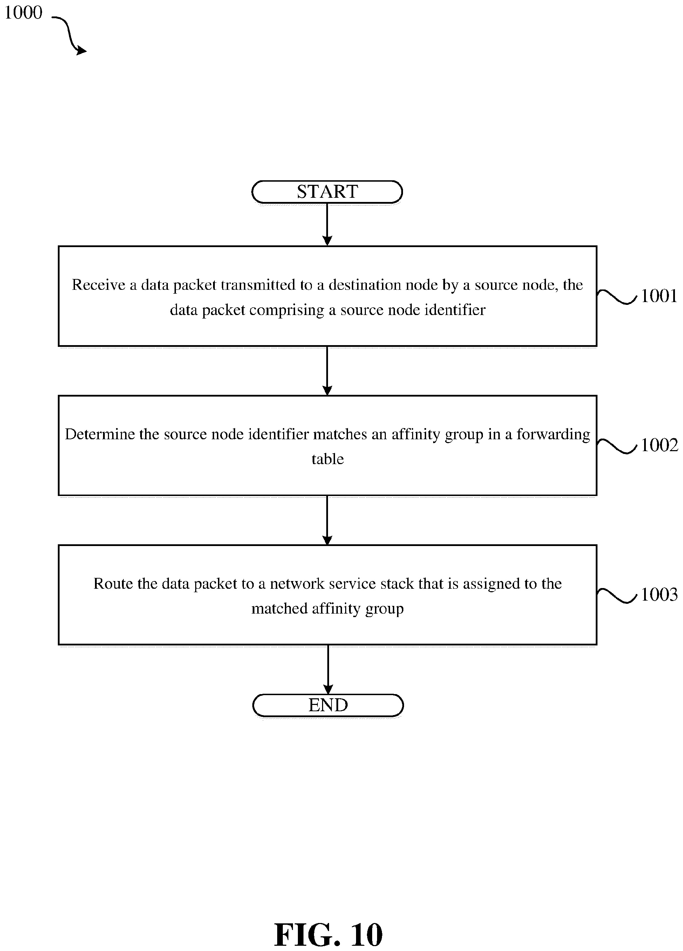

FIG. 10 illustrates a flow diagram for an example method for multi-region packet routing using path symmetry. The operations described herein are presented in the current order by way of example, and the order is not meant to be limiting. Moreover, operations may be omitted from or added to the example method. While the example method is described from the point of view of enforcement node 180a, the example method may be performed by any of enforcement nodes 180a-180c.

At block 1001, enforcement node 180a may receive a data packet transmitted to a destination node by a source node. The data packet may include a source node identifier. The source node may be located at a site in a first domain and the destination node may be located at a region in a second domain. For example, enforcement node 180a within region A of enterprise cloud computing domain 104 may receive a data packet from site 110a of user domain 102. In particular, enforcement node 180a may receive the data packet from a computing device within site 110a. The source node identifier may be an IP address/IP prefix that identifies a location of the source node. In some instances, the data packet may also include a destination node identifier that indicates an IP address/IP prefix of a location of the destination node. The destination node identifier may indicate a region in the second domain where the destination node is located. For example, the destination node identifier may indicate that the destination node is located in region B of enterprise cloud computing domain 104.

At block 1002, enforcement node 180a may determine the source node identifier matches an affinity group in a forwarding table. To do so, enforcement node 180a may perform a lookup operation on master forwarding table 510. Enforcement node 180a may parse the data packet to identify the source node IP address/IP prefix. In some instances, enforcement node 180a may also parse the data packet to identify the destination node IP address/IP prefix. Enforcement node 180a may use the source node IP address/IP prefix to perform a source node lookup operation on the master forwarding table. Enforcement node 180a may determine that the source node identifier matches that of a source node and network service stack pair that is assigned to an affinity group.

In some instances, enforcement node 180a may use the destination node IP address/IP prefix to perform a destination node lookup operation on the master forwarding table. Enforcement node 180a may determine that the destination node identifier matches that of a source and destination node pair that is assigned to an affinity group.

At block 1003, enforcement node 180a may route the data packet to a network service stack that is assigned to the matched affinity group. Enforcement node 180a may retrieve, from master forwarding table 510, an identifier of the next hop that should be used to steer the data packet toward the destination node. For example, enforcement node 180a may retrieve an IP address or IP prefix of the next hop, such as network service stack 150a. Enforcement node 180a may route the data packet toward network service stack 150a via the service interface in the topological rendering of the interfaces.

Network service stack 150a may process the received data packet. Network service stack 150a may route the processed data packet back to enforcement node 180a to be routed to the destination node. Enforcement node 180a may receive the processed data packet via the service interface. This may trigger enforcement node 180a to perform a second lookup operation on master forwarding table 510. Enforcement node 180a may retrieve, from master forwarding table 510, the IP address/IP prefix that corresponds to the destination node. Enforcement node 180a may route the processed data packet to the destination node.

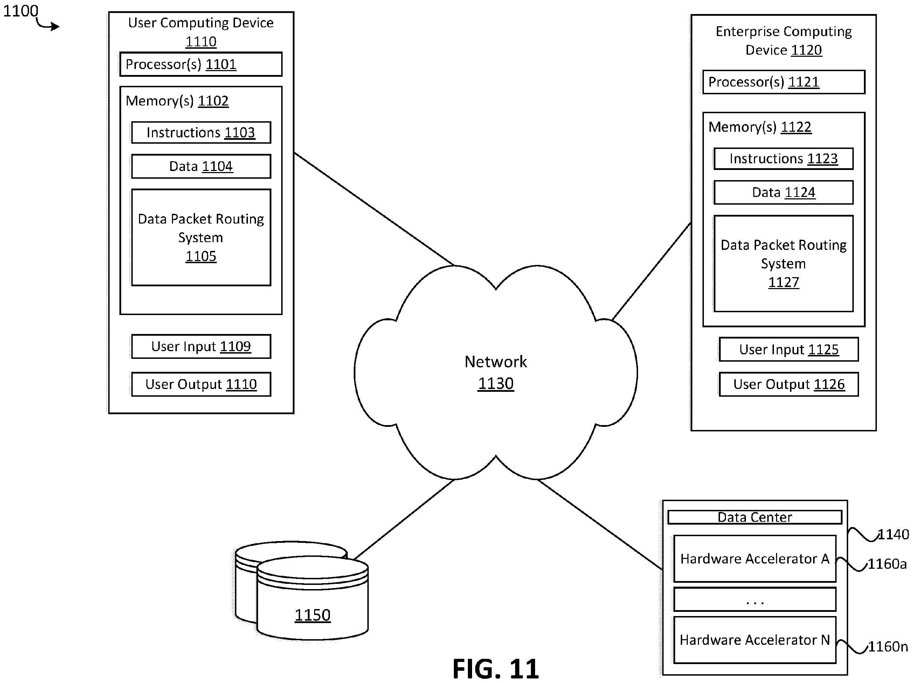

FIG. 11 illustrates a block diagram of an example computing environment for multi-region packet routing using path symmetry. Routing data packets across domains may require one or more computing devices within the domains, where the computing devices may be configured to generate the data packets. For example, a first domain may include user computing device 1110 while a second domain may include enterprise computing device 1120. User computing device 1110 and enterprise computing device 1120 may be communicatively coupled to one or more storage devices over a network. The storage devices may be a combination of volatile and non-volatile memory and may be at the same or different physical locations than the computing devices. For example, the storage devices may include any type of non-transitory computer readable medium capable of storing information, such as a hard-drive, solid state drive, tape drive, optical storage, memory card, ROM, RAM, DVD, CD-ROM, write-capable, and read-only memories.

Each of user computing device 1110 and enterprise computing device 1120 may be affiliated with a domain within a multi-region environment, such as a data packet routing environment. For example, user computing device 1110 may be affiliated with a user domain and enterprise computing device 1120 may be affiliated with an enterprise cloud computing domain. The user domain may include one or more sites, where each site may correspond to different geographic regions. Each site may include one or more computing devices, such as user computing device 1110. The enterprise cloud computing domain may include one or more regions, where each region may correspond to different geographic regions. Each region may include one or more computing devices, such as enterprise computing device 1120. The data packet routing environment may further include one or more network nodes and network devices, such as stateful devices, an enforcement node, an a network service stack.

User computing device 1110 may include one or more processors and memory, such as processor(s) 1101 and memory(s) 1102 (referred to herein as memory 1102). Memory(s) 1102 may include instructions 1103, data 1104, and data packet routing system 1105. Computing device 1110 may also include a user input and a user output, such as user input 1109 and user output 1110.

Memory 1102 may store information accessible by the processors, including instructions that may be executed by the processors. Memory 1102 may also include data that may be read, retrieved, manipulated, or stored by the processors. Memory 1102 may be a type of non-transitory computer readable medium capable of storing information accessible by the processors, such as volatile and non-volatile memory. The processors may include one or more central processing units (CPUs), graphic processing units (GPUs), field-programmable gate arrays (FPGAs), and/or application-specific integrated circuits (ASICs), such as tensor processing units (TPUs).

Instructions 1103 may include one or more instructions that, when executed by the processors, cause the one or more processors to perform actions defined by the instructions. Instructions 1103 may be stored in object code format for direct processing by the processors, or in other formats including interpretable scripts or collections of independent source code modules that are interpreted on demand or compiled in advance. Instructions 1103 may include instructions for routing data packets within a multi-region environment.

Data 1104 may be read, retrieved, stored, or modified by the processors in accordance with the instructions. Data 1104 may be stored in computer registers, in a relational or non-relational database as a table having a plurality of different fields and records, or as JSON, YAML, proto, or XML documents. Data 1104 may also be formatted in a computer-readable format such as, but not limited to, binary values, ASCII, or Unicode. Moreover, data 604 may include information sufficient to identify relevant information, such as numbers, descriptive text, proprietary codes, pointers, references to data stored in other memories, including other network locations, or information that is used by a function to calculate relevant data.

Data packet routing system 1105 may be configured to execute the one or more sets of instructions associated with routing data packets within a multi-region environment and across domains. Data packet routing system 1105 may be configured to communicate with the data packet routing environment, which may be hosted via network 1130. For example, user computing device 1110 may employ data packet routing system 1105 to generate one or more data packets to be routed to a different domain.

User input 1109 may include any appropriate mechanism or technique for receiving input, such as keyboard, mouse, mechanical actuators, soft actuators, touchscreens, microphones, and sensors. In some implementations, user input 1109 may be used to receive notifications indicating successful routing of the one or more generated data packets.

User output 1110 may be used to display the one or more data packets to be routed to a different domain. In some instances, user output 1110 may be used to display one or more data packets received from a different domain and/or different computing device.

Enterprise computing device 1120 may also be configured similarly to user computing device 1110, with one or more processors, memory, instructions, and data, such as processor(s) 1121, memory(s) 1122, instructions 1123, data 1124, and data packet routing system 1127. Enterprise computing device 1120 may also include a user input and a user output, such as user input 1125 and user output 1126. User input 1125 may include any appropriate mechanism or technique for generating one or more data packets to be routed to another domain and/or another computing device, such as keyboard, mouse, mechanical actuators, soft actuators, touchscreens, microphones, and sensors. User output 1126 may be used to display the one or more data packets to be routed to a different domain. In some instances, user output 1126 may be used to display one or more data packets received from a different domain and/or different computing device. User output 1126 can alternatively or additionally include one or more speakers, transducers or other audio outputs, a haptic interface or other tactile feedback that provides non-visual and non-audible information to the platform user of the enterprise computing device 1120.

Although FIG. 11 illustrates the processors and the memories as being within the computing devices, components described herein can include multiple processors and memories that can operate in different physical locations and not within the same computing device. For example, some of the instructions and the data can be stored on a removable SD card and others within a read-only computer chip. Some or all of the instructions and data can be stored in a location physically remote from, yet still accessible by, the processors. Similarly, the processors can include a collection of processors that can perform concurrent and/or sequential operation. The computing devices can each include one or more internal clocks providing timing information, which can be used for time measurement for operations and programs run by the computing devices.

User computing device 1110 may be connected over network 1130 to a data center housing any number of hardware accelerators, such as data center 1140 housing hardware accelerators 1160a-1 160n. Data center 1140 can be one of multiple data centers or other facilities in which various types of computing devices, such as hardware accelerators, are located. Computing resources housed in the data center can be specified for routing data packets across domains within a multi-region environment, as described herein.

The data packets routed between user computing device 1110 and enterprise computing device 1120 and across network 1130 may be stored in database 1150. In some instances, database 1150 may store a forwarding table that may be used for routing the data packets. Further, in some instances, database 1150 may store master forwarding table 510 that may be generated by the enforcement node.

User computing device 1110, enterprise computing device 1120, and data center 1140 may be capable of direct and indirect communication over network 1130. For example, using a network socket, enterprise computing device 1120 may connect to a service operating in data center 1140 through an Internet protocol. User computing device 1110 and enterprise computing device 1120 may set up listening sockets that may accept an initiating connection for sending and receiving information. Network 1130 itself may include various configurations and protocols including the Internet, World Wide Web, intranets, virtual private networks, wide area networks, local networks, and private networks using communication protocols proprietary to one or more companies. Network 1130 may support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. Network 630 may, in addition or alternatively, also support wired connections between the devices and the data center, including over various types of Ethernet connection.

It is understood that the aspects of the disclosure may be implemented according to a variety of different configurations and quantities of computing devices, including in paradigms for sequential or parallel processing, or over a distributed network of multiple devices.

The method described herein may be an iterative process in that the described steps may be performed each time a data packet is to be routed across domains. In some implementations, the described method may be performed in parallel such that more than one data packet may be processed for routing.

The foregoing aspects of this technology offer a method of defining more than one viable and active routing paths within a multi-region routing environment. The described technology also provides a method for assigning specific routes to specific affinity groups, where each affinity group is assigned to a network service stack to process data packets. By dividing a totality of network traffic into different affinity groups to be processed by different network service stacks, the described technology reduces the bottlenecking and latency delays that a single viable path may experience when the totality of network traffic is routed through the single path.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed on it software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components, or can be installed on one or more computers in one or more locations. A particular engine can have one or more computers dedicated thereto, or multiple engines can be installed and running on the same computer or computers.

The processes and logic flows described herein can be performed by one or more computers or special purpose logic circuitry, such as a system on chip (SoC) executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back-end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the implementations should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A method for routing data packets, the method comprising:
receiving, by one or more processors, a data packet transmitted to a destination node by a source node, the data packet comprising a source node identifier;
determining, by the one or more processors, the source node identifier matches an affinity group in a forwarding table; and
routing, by the one or more processors, the data packet to a network service stack that is assigned to the matched affinity group.

2. The method of claim 1, wherein the data packet further comprises a destination node identifier.

3. The method of claim 2, further comprising, prior to routing the data packet, determining the destination node identifier matches the affinity group in the forwarding table.

4. The method of claim 2 or claim 3, wherein:
the source node is in a first domain;
the destination node is in a second domain; and
the destination node identifier indicates a region in the second domain where the destination node is located.

5. The method of one of claims 2 to 4, wherein the source node identifier is an internet protocol (IP) prefix that corresponds to the source node, and
wherein the destination node identifier is an IP prefix that corresponds to the destination node.

6. The method of one of claims 1 to 5, wherein determining the source node identifier matches the affinity group comprises comparing the source node identifier to a collection of affinity groups, each affinity group including source node and network service stack pairs.

7. The method of one of claims 1 to 6, further comprising:
receiving, by the one or more processors and from the network service stack, a processed data packet; and
routing, by the one or more processors, the processed data packet to the destination node.

8. The method of one of claims 1 to 7, further comprising:
determining, by the one or more processors, the destination node is located in a same region as the one or more processors,
wherein routing the data packet includes routing the data packet to the network service stack, the network service stack being in the same region as the one or more processors.

9. The method of one of claims 1 to 8, further comprising:
determining the destination node is located in a different region than the one or more processors,
wherein routing the data packet includes routing the data packet to the network service stack, the network service stack being in the different region than the one or more processors.

10. A system for routing data packets, the system comprising:
a source node within a first domain;
a destination node within a second domain; and
one or more processors configured to:
receive a data packet transmitted to the destination node by the source node, the data packet comprising a source node identifier;
determine the source node identifier matches an affinity group in a forwarding table; and
route the data packet to a network service stack that is assigned to the matched affinity group.

11. The system of claim 10, wherein the data packet further comprises a destination node identifier; and
wherein optionally the one or more processors are further configured to, prior to routing the data packet, determine the destination node identifier matches the affinity group in the forwarding table.

12. The system of claim 10 or claim 11, wherein determining the source node identifier matches the affinity group causes the one or more processors to compare the source node identifier to a collection of affinity groups, each affinity group including source node and network service stack pairs.

13. The system of one of claims 10 to 12, wherein the one or more processors are further configured to:
determine the destination node is located in a same region as the one or more processors,
wherein routing the data packet includes routing the data packet to the network service stack, the network service stack being in the same region as the one or more processors.

14. The system of one of claims 10 to 13, wherein the one or more processors are further configured to:
determine the destination node is located in a different region than the one or more processors,
wherein routing the data packet includes routing the data packet to the network service stack, the network service stack being in the different region than the one or more processors.

15. A non-transitory computer readable storage medium storing instructions that, when executed by one or more processors for routing data packets, cause the one or more processors to carry out the method according to one of claims 1 to 9.
